# EUROPEAN PATENT APPLICATION

(11) **EP 1 962 507 A1**
(43) Date of publication of application: **27.08.2008**
(21) Application number: 07123690.5
(22) Date of filing: 19.12.2007
(51) Int. Cl.: H04N 7/173

(54) **Method for sending stream media, signaling forwarding device and stream media system**

(30) Priority: 25.02.2007 CN 200710073386; 26.06.2007 CN 200710127753
(71) Applicant: Huawei Technologies Co., Ltd., Longgang District, Shenzhen Guangdong 518129 (CN)
(72) Inventor: Gan, Mo, Guangdong 518129 (CN)
(74) Representative: Collin, Jérôme

(57) **Abstract**

A method for sending stream media, in which a signaling forwarding device is set in a stream media system, includes: receiving a signaling message sent by a terminal; selecting a media server for the terminal according to a predetermined policy, sending the received signaling message to the media server selected for the terminal and forwarding a response message from the media server to the terminal so as to realize the signaling exchanging between the terminal and the media server; and sending , by the media server, a media stream to the terminal according to the result of signaling exchanging. The invention further provides a signaling forwarding device and a stream media system. In the invention, the signaling stream is separated from the data stream, so that the media server may specialize in its own functions, and it may selects a media server for a terminal according to a policy.

## Description

This application claims the benefits of CN Application No. 200710073386.9 filed on Feb.25 2007 and CN Application No. 200710127753.9 filed on Jun.26 2007, both titled "STREAM MEDIA SYSTEM, SIGNALING FORWARDING DEVICE AND METHOD FOR SENDING STREAM MEDIA", the content of which is incorporated herein by reference in its entirety.

### Field of the Invention

The present invention relates to the field of stream media, in particular, to a method for sending stream media, a signaling forwarding device and a stream media system.

### Background of the Invention

At present, network television is also referred to as IPTV (Internet Protocol TV or Interactive Personal TV), relating to Content Distribution Network (CDN) and mobile stream media field. Video on demand means that a media server serves a terminal in unicast mode. The signaling stream and the data stream are exchanged directly between the media server and the terminal. All the signaling messages are managed by each media server independently, and charging messages are reported by each media server.

In a stream media system, Real Time Streaming Protocol (RTSP) is used for exchanging the request signaling or response signaling based on Transfer Control Protocol (TCP) between a terminal and a media server. A request and a response compose a complete RTSP interaction. Typical RTSP request message includes DESCRIBE, OPTIONS, SETUP, PLAY, TEARDOWN. In a normal process, a media server usually uses Realtime Transform Protocol (RTP) to send a media stream to a terminal according to UDP/TCP, and the terminal receives, decodes and plays the media stream.

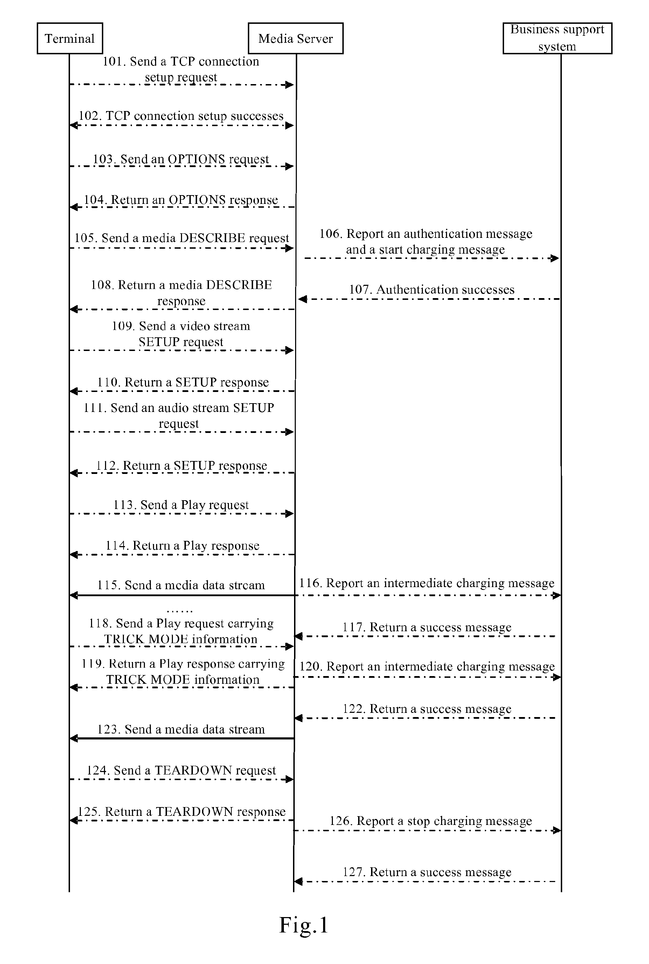

As shown in Figure 1 (the broken lines represent signaling stream exchanging, the solid line represents data stream exchanging), the existing procedure in which a media server provides media service to a terminal is as follows:

Process 101 to Process 102: A terminal initiates a TCP connection setup request, and a TCP connection is set up between the terminal and the media server after a TCP negotiation. This TCP channel is used for RTSP message transmission.

Process 103 to Process 104: The terminal initiates an OPTIONS request for querying the capability of the media server, for example, what TRICK MODE is supported by the media server, and then the media server returns its capability to the terminal via an OPTIONS response message.

Process 105 to Process 108: The terminal initiates a DESCRIBE request for detailed description of the media file on demand or the live channel, and the server returns a result, such as the video-audio coded format of the media, the sampling rate and the packaging format of the stream, via a DESCRIBE request response message. During this process, the media server needs to report an authentication message and a start charging message to a business support system. The authentication message and the start charging message are usually reported together to the business support system. The media server may choose to report the authentication message and the charging message to the business support system during the process in which the whole media file on demand is received. The first authentication message and start charging message are usually reported together to the business support system. Also, the media server may choose to report the messages when a DESCRIBE request message is received. The media server determines whether to serve the terminal according to a response message which indicates whether the authentication by the business support system is passed; if the authentication is passed, the media server provides the service to the terminal.

Process 109 to Process 112: In the case of unicast, the terminal initiates a SETUP request carrying IP address of the terminal and Port to which the server is required to send the information, to ask for setting up a video-audio connection channel with the media server, and the media server returns a response message indicating a success. When Realtime Transform Protocol (RTP) is taken for stream transmission, a SETUP request is needed to be sent twice, for setting up a video transmission channel and an audio transmission channel respectively.

Process 113 to Process 115: After the video and audio channels are set up correctly, the terminal initiates a PLAY request, asking for media data from the media server. After responding to the message, the media server starts to transmit data to the terminal in unicast mode via the video and audio channels.

Process 116 to Process 123: During the play process, the terminal may carry TRICK MODE information in a PLAY request message, and the media server may send a data package, such as Fast Forward, Fast Reverse, and Positioning, as required by the terminal. During the play process, i.e., during the process in which the media server outputs media stream to the terminal in unicast mode, the media server may report an intermediate charging message to the business support system periodically, so that the business support system can provide a real-time fees deducting function.

Process 124 to Process 127: When the current play process needs to be ended, the terminal sends a TEARDOWN message to the media server, and the media server stops sending the media stream to the terminal after it returns a success message, thus the play process ends. When the play process ends, the media server reports a charging stop message to the business support system, and the current fees deducting for the user ends.

It can be seen from the above process in which the media server provides media service to the terminal that the terminal and the media server exchange the signaling stream directly, and the signaling exchanging is dispersed, so that unified management cannot be realized. Therefore, the information, such as the current state, play success ratio, cannot be collected in real time.

At the same time, the media server needs to additionally report charging messages to the business support system, thus the performance of the media server will be influenced.

Furthermore, because all the signaling control messages are directly exchanged with the media server, if the media server needs to be connected with different terminals, the media server is required to be adapted to different signaling control protocols, which results in complex modification on the media server when the media server is connected with multiple terminals.

Moreover, it can be seen from the above procedure that each media server interacts with the terminal independently, and no correlation exists between different media servers, and therefore load balancing cannot be realized between different media servers.

### Summary of the Invention

In view of the above, the invention provides a method for sending stream media, a signaling forwarding device and a stream media system, by use of which at least part of the problems in the prior art can be solved.

A method for sending stream media includes:

receiving a signaling message sent by a terminal;

sending the received signaling message to a media server selected for the terminal, and forwarding a response message from the media server to the terminal so as to realize the signaling exchanging between the terminal and the media server; and

sending, by the media server, a media stream to the terminal according to the result obtained via signaling exchanging.

A signaling forwarding device includes:

a receiving unit, for receiving a signaling message sent by a terminal; and

a forwarding unit, for forwarding the signaling message to a media server selected for the terminal and forwarding a response message from the media server to the terminal.

Preferably, the signaling forwarding device further includes:

a policy unit, for providing a policy of selecting a media server for a terminal and selecting a media server for the terminal according to a predetermined policy;

The invention further provides a stream media system, which includes a signaling forwarding device and a media server. The signaling forwarding device includes: a receiving unit for receiving a signaling message sent by a terminal and a forwarding unit for forwarding the signaling message to the media server selected for the terminal and forwarding a response message from the media server to the terminal.

The media server is adapted to send a media stream to the terminal according to the received signaling message that is sent by the signaling forwarding device.

An embodiment of the invention provides a solution for transmitting signaling stream and data stream separately. In the solution, a signaling stream is transmitted via a signaling channel from a terminal to a signaling forwarding device and then to a media server. The media server sends a media stream via a data channel between the media server and the terminal and interacts with the terminal directly, so that the signaling stream and the data stream are separated, and the media server may specialize in its own functions. Moreover, in the invention, a media server is selected for the terminal according to a policy, so that load balancing may be realized between different media servers, and the performance of the stream media system may be improved.

### Brief Description of the Drawings

Figure 1 is a flow chart of the process in which a media server provides media service to a terminal in the prior art;

Figure 2 shows a stream media system according to embodiment 1 of the invention;

Figure 3 shows a stream media system according to embodiment 2 of the invention;

Figure 4 shows a signaling forwarding device according to embodiment 3 of the invention;

Figure 5 shows a signaling forwarding device according to embodiment 4 of the invention;

Figure 6 is a flow chart of the process in which a media server provides media service to a terminal according to embodiment 5 of the invention;

Figure 7 is a schematic diagram of the process for switching between different media servers according to embodiment 6 of the invention.

### Detailed Description of the Embodiments

Embodiment 1

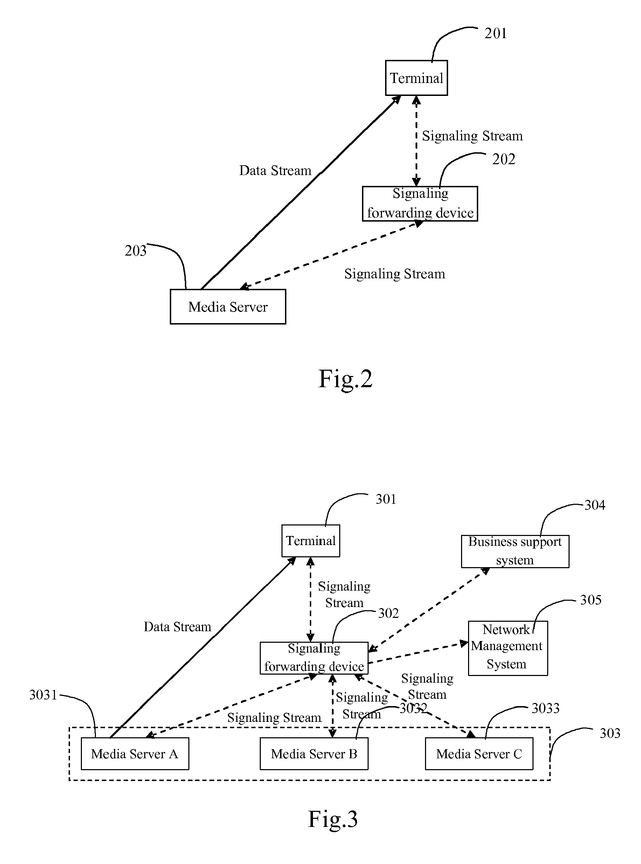

This embodiment provides a stream media system. Referring to Figure 2, the stream media system includes a terminal 201, a signaling forwarding device 202 and a media server 203. The terminal 201 sends a media signaling stream to the signaling forwarding device 202. The signaling forwarding device 202 receives the signaling stream sent by the terminal 201, and sends the received signaling stream to the media server 203. The media server 203 determines whether to send a media stream to the terminal 201 according to the received signaling stream that is sent by the signaling forwarding device 202.

Embodiment 2

This embodiment provides a stream media system. Referring to Figure 3, the stream media system includes a terminal 301, a signaling forwarding device 302, a media server 303 (comprising a media server A 3031, a media server B 3032 and a media server C 3033), a business support system 304 and a Network Management system 305. The terminal 301 sends a media signaling stream to the signaling forwarding device 302. The signaling forwarding device 302 reports an authentication request for the terminal 301 to the business support system 304, and receives a result of authentication for the terminal 301 sent by the business support system 304. The business support system 304 authenticates the terminal 301 and sends a result of authentication for the terminal 301. The signaling forwarding device 302 sends the received result of authentication sent by the business support system 304 and the received signaling stream sent by the terminal 301 to the media server 303. The media server 303 determines whether to send a media stream to the terminal 301 according to the result of authentication and the signaling stream that are received, and sends the media stream to the terminal 301 when the received result of authentication is that the authentication is passed and a signaling stream of play request is received.

When forwarding a signaling stream for the first time, the signaling forwarding device 302 establishes a mapping between the terminal 301 and one of the multiple media servers 303, such as the media server A3031; subsequently, when a signaling stream sent by the terminal 301 is received again, the signaling stream will be directly forwarded to the media server A3031 which has been set up a mapping with the terminal 301.

If the signaling forwarding device 302 manages three media servers of the media server A 3031, the media server B 3032 and the media server C 3033, when the terminal 301 sends a signaling stream to the signaling forwarding device 302, the signaling forwarding device 302 may select one of the three media servers it manages to serve the terminal 301. The selection policy may be based on information of CPU, memory, Disk read/write rate (Disk I/O), number of users, bandwidth, running state of application software and distribution state of media content, etc. The priority of each of such selection policies may be defined by user customization. Usually, running state of the media server and running state of application software are the primary preconditions. When the media server is in operation, the signaling forwarding device computes the load of each media server by using the parameters such as CPU, memory, Disk I/O, in the form of weighted sum, and selects and invokes a media server according to the loads from light to heavy. When a user experience first principle is considered, the media server may also be invoked according to the media content distribution status. A media server with media content is selected first to guarantee preferentially the user experience, and the media server will be invoked according to load condition when the content is distributed on multiple media servers.

A normal heartbeat connection should be maintained between each media server 303 and the signaling forwarding device 302, so that the signaling forwarding device may check the load condition of each media server in real time. When a media server A3031, which is providing a media stream, is heavily loaded, the signaling forwarding device may re-select another media server, such as the media server B3032, to serve the terminal 301 according to the predefined selection policy, i.e., the signaling forwarding device sends a TEARDOWN message to the media server A3031 and send a CONNECTION message to the media server B3032, and at the same time, the signaling forwarding device updates the mapping between the terminal 301 and the media server A3031 into the mapping between the terminal 301 and the media server B3032.

The signaling forwarding device 302 may also directly report a charging message for each terminal 301 to the business support system 304. The charging message may be the start charging message, the intermediate charging message or the stop charging message, and all the charging messages are managed by the signaling forwarding device 302 uniformly, thus the performance of media server 303 may be improved.

Because all the signaling messages are forwarded by the signaling forwarding device 302, the signaling forwarding device 302 saves the performance data, such as the connection number of terminal 301, the connection number of each media server 303 (for example, live and on demand, etc.), the Trick Mode state of each media server 303, the load condition of each media server 303. Therefore, all of such performance data may be reported by the signaling forwarding device 303 to the network management system 305, without the need to connect the media server 303 with the network management system 305, so that the performance of media server 303 may be improved greatly, and the media server 303 may be specialized in the basic performance of media service.

Because the protocols employed for the signaling messages of different terminals may be different, the signaling forwarding device may act as a signaling gateway and convert a signaling protocol initiated by the terminal, such as the SIP protocol, into a signaling protocol that may be received by the media server, such as the RTSP protocol. Therefore, when different terminals are supported, the signaling forwarding device may perform protocol conversion to support different terminals, without the need to modify the media server.

Embodiment 3

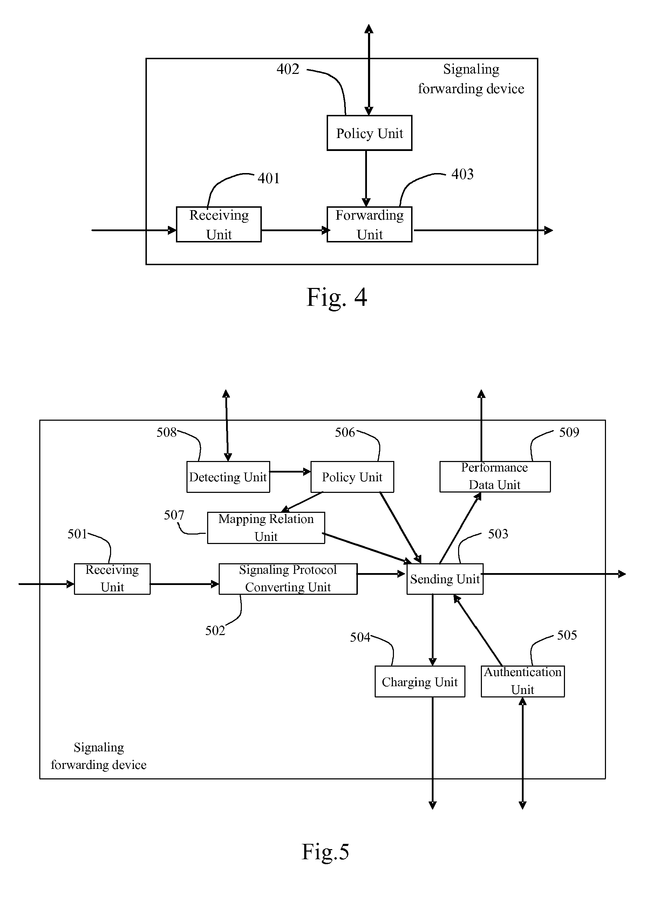

This embodiment provides a signaling forwarding device. Referring to Figure4, the signaling forwarding device includes: a receiving unit 401 for receiving a signaling stream sent by a terminal, a policy unit 402 for providing a policy of selecting a media server for the terminal and selecting a media server for the terminal according to the policy, and a forwarding unit 403 for sending the received signaling stream to the selected media server.

Embodiment 4

This embodiment provides a signaling forwarding device. Referring to Figure5, the signaling forwarding device includes: an authentication unit 505 for reporting an authentication request of a terminal to a business support system and receiving a result of authentication for the terminal sent by the business support system, a receiving unit 501 for receiving a signaling stream sent by a terminal and a sending unit 503, for sending the result of authentication and the signaling stream to the media server.

The signaling forwarding device includes a mapping relation unit 507. When forwarding a signaling stream for the first time, the signaling forwarding device establishes a mapping between the terminal and the media server. Subsequently, when receiving a signaling stream sent by the terminal again, the signaling forwarding device directly forwards the signaling stream to the media server which has been set up a mapping with the terminal.

When receiving a signaling stream sent by the terminal, the signaling forwarding device may forward the signaling stream to one of a plurality of media servers. The signaling forwarding device includes a policy unit 506, for setting a selection policy to select a media server. The selection policy may be based on information of CPU, memory, Disk I/O, number of users, bandwidth, running state of application software and distribution state of media content, etc. The priority of each of such selection policies may be determined by user customization. Usually, running state of the media server and running state of application software are the primary preconditions. When the media server is in operation, the signaling forwarding device computes the load of each media server by using the parameters such as CPU, memory, Disk I/O, in a weighted sum mode, and selects and invokes a media server according to the loads from light to heavy. When a user experience first principle is considered, the media server may also be invoked according to the media content distribution status. A media server with media content is selected first to guarantee preferentially the user experience, and the media server will be invoked according to load condition when the content is distributed on multiple media servers.

The signaling forwarding device includes a detecting unit 508. Each media server needs to maintain a normal heartbeat connection with the signaling forwarding device, so that the detecting unit in the signaling forwarding device may check the failure and/or the load condition of each media server in real time. When a media server, which is providing a media stream, is heavily loaded, the signaling forwarding device may re-select another media server to serve the terminal according to the predefined selection policy, i.e., the signaling forwarding device sends a TEARDOWN message to the media server with too heavy load and sends a CONNECTION message to the re-selected media server, and at the same time, the signaling forwarding device updates the mapping between the terminal and the media server.

The signaling forwarding device includes a performance data unit 509. Because all the signaling messages are forwarded via the signaling forwarding device, the signaling forwarding device saves performance data, such as the connection number of terminal, the connection number of each media server (for example, live and on demand, etc.), the Trick Mode state of each media server and the load condition of each media server. Therefore, all of such performance data may be reported to the network management system by the performance data unit in the signaling forwarding device, without the need to connect the media server with the network management system, so that the performance of the media server may be improved greatly, and the media server can specialize in the basic performance of media service.

The signaling forwarding device includes a charging unit 504 for reporting a charging message for each terminal to the business support system. The charging message includes the start charging message and the stop charging message, and it may also include the intermediate charging message. All the charging messages are managed by the charging unit 504 in the signaling forwarding device uniformly, and therefore the performance of the media server can be improved.

The signaling forwarding device includes a signaling protocol converting unit 502. Because the protocols employed for the signaling messages of different terminals may be different, the signaling protocol converting unit 502 in the signaling forwarding device converts a signaling protocol initiated by the terminal, such as the SIP protocol, into a signaling protocol that may be received by the media server, such as the RTSP protocol. Therefore, when supporting different terminals, the signaling forwarding device may perform protocol conversion to support different terminals, without the need to modify the media server, so that the performance of the media server may be improved.

Embodiment 5

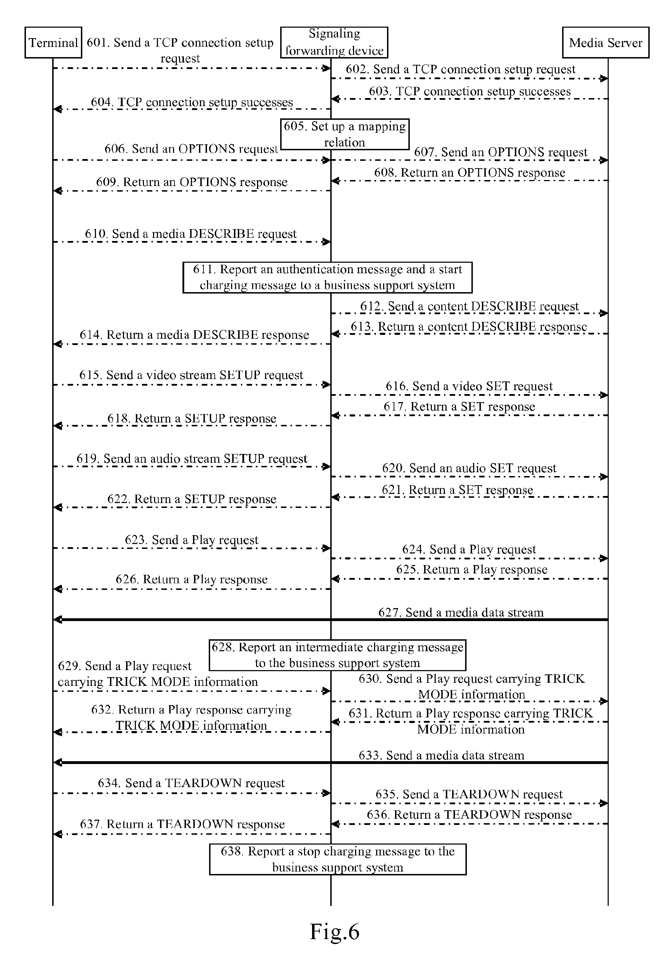

This embodiment provides a procedure in which the media server provides media service to the terminal, referring to Figure 6 (the broken lines represent signaling stream exchanging, the solid line represents data stream exchanging):

Process 601 to Process 605: A terminal initiates a TCP connection setup request. After receiving the TCP connection request, the signaling forwarding device initiates a TCP connection setup request to a media server and then the media server sends a TCP connection response to the signaling forwarding device. When receiving the TCP connection response sent by the media server, the signaling forwarding device sets up a TCP connection with the media server and sends a TCP connection response message to the terminal, and at the same time, the signaling forwarding device also sets up a TCP connection with the terminal. During this process, the signaling forwarding device selects a media server for setting up a TCP connection with the media server. The policy for the signaling forwarding device to select a media server may be user-defined, and it includes, but is not limited to CPU, memory, number of users, bandwidth, running state of application software and distribution state of media content. For each connection of the terminal or the media server, the signaling forwarding device sets up a mapping internally when it forwards the signaling to the media server for the first time; subsequently, after receiving a signaling request from the terminal again, the signaling forwarding device may directly forward the signaling request to the corresponding media server according to the mapping, and may forward a response message of the media server to the terminal according to the mapping. The terminal includes, but not limited to, Mobile Phone, Personal Computer (PC), Personal Digital Assistant (PDA) and Set Top Box.

Process 606 to Process 609: The terminal initiates an OPTIONS request for querying the capability of the media server, for example, what TRICK MODE is supported by the media server. After receiving the request, the signaling forwarding device forwards the request to the media server. The media server returns its capability to the signaling forwarding device via an OPTIONS response message, and then the signaling forwarding device forwards the response message to the terminal.

Process 610 to Process 614: The terminal initiates a DESCRIBE request, asking for the detailed description of the media file on demand or the live channel. The signaling forwarding device forwards the message to the media server, and the media server returns a result, such as the video-audio coded format of media, the sampling rate, the packaging format of stream, via a DESCRIBE request response message. If transmission is performed in multicast mode, the multicast IP information further needs to be returned, and the signaling forwarding device forwards the message to the terminal after receiving it.

Process 615 to Process 622: In the case of unicast, the terminal initiates a SETUP request carrying the terminal's IP address and Port to which the server is required to send the information , to ask for setting up a video-audio connection channel with the media server. The signaling forwarding device forwards the information to the media server, and forwards a response message indicating a success returned by the media server to the terminal. When RTP protocol is taken for a stream transmission, a SETUP request needs to be sent twice, for setting up a video transmission channel and an audio transmission channel respectively. Because the terminal records the destination IP address, which is the IP address of the terminal, in the SETUP message, and when notifying the media server, the signaling forwarding device does not modify the address, then the media server will directly send a media stream to the terminal subsequently, rather than sending the media stream to the signaling forwarding device. Process 615 to Process 622 may be represented as follows:
SETUP rtsp://example.com/foo/bar/baz.mpg RTSP/1.0
CSeq:3
Transport:MP2T/[RTP]/TCP|UDP;unicast;destination=172.18.79.120;client_port=4588-45 89
[Range: npt=now-end]
[Accept: application/sdp]
[x-Properties: mac_address=0050BFFB9FA1]

In the above process, destination=172.18.79.120 is the IP address of the terminal, and the media server will finally send a media stream to the terminal according to this address.

Process 623 to Process 633: After the video and audio channels are set up correctly, the terminal initiates a PLAY request , asking for media data from the media server. The signaling forwarding device forwards the message to the media server and the media server responds to the message and starts to transmit data to the terminal in unicast mode via the video and audio channels.

During the play process, the terminal may carry TRICK MODE information in a PLAY message which may be forwarded to the media server by the signaling forwarding device. The media server may send a data package, such as Fast Forward, Fast Reverse, and Positioning, as required by the terminal.

Process 634 to Process 637: When the current play process needs to be ended, the terminal sends a TEARDOWN request message to the signaling forwarding device, and then the signaling forwarding device forwards the request message to the media server. The media server stops sending the media stream to the terminal after it returns a message indicating a success, thus the play process ends.

During the whole process of on demand, because all the signaling control messages are forwarded via the signaling forwarding device, all the charging messages may be reported to the business support system by the signaling forwarding device. The first authentication message and the start charging message are usually reported together to the business support system the signaling forwarding device may choose to report the messages during the content DESCRIBE process, and the signaling forwarding device may determine whether to serve the terminal according to a return message for the authentication from the business support system, as shown in Process 611.

During the play process, for each connection, the signaling forwarding device may report an intermediate charging message to the business support system periodically, so that the business support system can provide a real-time fees deducting function, as shown in Process 628.

When the play process ends, the signaling forwarding device may report a charging stop message to the business support system after it receives the TEARDOWN message to end the current fees deducting for the user.

For the RTSP protocol, this mode is suitable for sending media data between the media server and the terminal in TCP direct connection mode or in User Datagram Protocol (UDP) mode.

A normal heartbeat connection should be maintain between each media server and the signaling forwarding device, so that the signaling forwarding device may check the load condition of each media server in real time. When it is detected that a media server, which is providing a media stream, is heavily loaded, the signaling forwarding device may re-select another media server to serve the terminal according to the predefined selection policy, and at the same time, update the mapping between the terminal and the media server.

It can be seen from the above procedure that all the signaling messages are forwarded via the signaling forwarding device. Thus, the signaling forwarding device saves the performance data such as the connection number of the terminal, the connection number of each media server (for example, live and on demand, etc.), the Trick Mode state of each media server and the load condition of each media server, etc. Therefore, all of such performance data may be reported to the network management system by the signaling forwarding device, without the need to connect the media server with the network management system, so that the performance of the media server may be improved greatly, and the media server can be specialized in the basic performance of media service.

Because the protocols employed for the signaling messages of different terminals may be different, the signaling forwarding device may act as a signaling gateway to convert a signaling protocol initiated by the terminal, such as the SIP protocol, into a signaling protocol that may be received by the media server, such as the RTSP protocol. Thus, when different terminals are supported, the signaling forwarding device may perform protocol conversion to support different terminals, without the need to modify the media server.

Embodiment 6

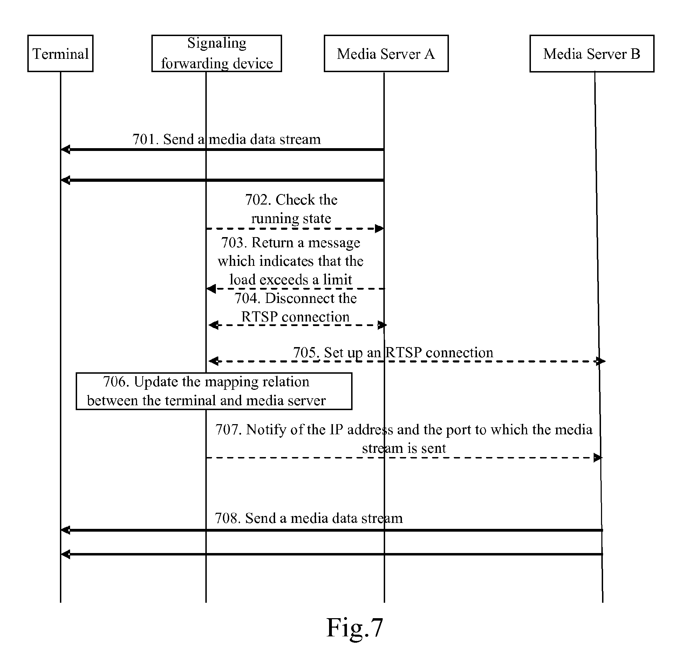

This embodiment provides a procedure for switching between different media servers, referring to Figure7:

Process 701: A media server A provides media service to a terminal and sends a media data stream to the terminal.

Process 702 to Process 703: A signaling forwarding device checks the running state of each media server, and the media server A returns a message which indicates that its load exceeds a limit.

Process 704: The signaling forwarding device disconnects the signaling connection with the media server A.

Process 705: The signaling forwarding device sets up a signaling connection with the media server B.

Process 706: The signaling forwarding device updates the mapping between the terminal and media server A into the mapping between the terminal and media server B.

Process 707: The signaling forwarding device notifies the media server B of the IP address and the port of the media stream to be sent.

Process 708: The media server B sends a media data stream to the terminal.

The duration of above switching process is short, so the buffered data in the terminal may support the switching time.

For all of the stream media system, the signaling forwarding device and the method for sending stream media according to the above embodiments, a solution for transmitting signaling stream and data stream separately between a terminal and a media server is provided. The signaling stream is switched between each of the media servers and terminals via one signaling forwarding device, and the signaling forwarding device selects and invokes one of the media servers it manages. At this point, a selection standard with which the load balancing is realized may be made according to the requirements of the service, for example, the information of CPU, memory, number of users, bandwidth, running state of application software and distribution state of media content, etc. The signaling forwarding device forwards the signaling stream to the media server, and forwards the response message from the media server to the terminal, thus a signaling channel from the terminal to the signaling forwarding device and then to the media server may be maintained. The media server sends the media stream via a data channel between the media server and the terminal and interacts with the terminal directly. By separating the signaling stream from the data stream, the signaling forwarding device can realize specialized and unified management of signaling. All of the auxiliary functions, such as charging report, performance data collection, signaling protocol conversion, invoking between different media servers, are implemented by the signaling forwarding device, so that the media server may be specialized in its own functions.

All of the stream media system, the signaling forwarding device and the method for sending stream media according to the above embodiments may be applied to IPTV field, CDN field, mobile field or other related fields. The terminal signaling control protocol and the stream transmission protocol in each field may be different. For example, in IPTV field, a terminal usually employs the RTSP protocol to set up a connection, while it may use the RTSP or the MPEG2 TS specification to perform stream transmission. In CDN field, protocols such as MMS, may be employed for signaling control, and the private stream transmission protocol of Microsoft or RealNetworks may be employed for stream transmission. In mobile field, the RTSP may be employed for signaling control, and the RTP protocol may be employed for stream transmission. Additionally, control and transmission protocol such as the SIP and H.323 Protocol Suite may be employed in some other fields. However, no matter what kind of protocol is employed, the signaling forwarding device can be applied between a terminal and a media server to implement the forwarding and control of a signaling message.

In conclusion, the invention provides a solution for transmitting signaling stream and data stream separately. A signaling stream is transmitted via a signaling channel from a terminal to a signaling forwarding device and then to a media server, and the signaling forwarding device may also perform signaling protocol conversion. The media server sends the media stream via a data channel between the terminal and the media server and interacts with the terminal directly, so that the signaling stream and the data stream can be separated, thus the media server may be specialized in its own functions. Moreover, in the invention, a media server is selected for a terminal according to a policy, so that load balancing may be realized between different media servers, and the performance of the stream media system may be improved.

Additional advantages and modifications will readily occur to those skilled in the art. Therefore, the invention in its broader aspects is not limited to the specific details and representative embodiments shown and described above. Accordingly, various modifications and variations may be made without departing from the spirit or scope of the invention as defined by the appended claims and their equivalents.

## Claims

1. A method for sending stream media, **characterized by** comprising:
receiving a signaling message sent by a terminal;
selecting a media server for the terminal according to a predetermined policy; and
sending the received signaling message to the media server selected for the terminal, and forwarding a response message from the media server to the terminal so as to realize the signaling exchanging between the terminal and the media server.

2. The method according to claim 1, **characterized by** further comprising:
sending, by the media server, a media stream to the terminal according to the result of the signaling exchanging.

3. The method according to claim 1, **characterized in that** the policy is set according to at least one of the following parameters:
CPU occupation, memory occupation, number of users connected to the media server, bandwidth, running state of application software, and distribution state of media content.

4. The method according to claim 1, **characterized by** further comprising:
establishing a mapping between the terminal and the media server after selecting a media server for the terminal, and forwarding the signaling message exchanged between the terminal and the media server according to the mapping.

5. The method according to claim 4, **characterized by** further comprising:
re-selecting a media server for the terminal when it is detected that the media server fails or the load exceeds a preset value, and forwarding the signaling message sent by the terminal to the re-selected media server.

6. The method according to claim 5, **characterized by** further comprising:
updating the mapping between the terminal and the media server after re-selecting a media server for the terminal.

7. The method according to claim 1, **characterized by** further comprising:
receiving an authentication request sent by the terminal;
sending the authentication request to a business support system;
sending the result of authentication made by the business support system for the terminal to the media server, so that the media server may determine whether to send the media stream to the terminal according to the result of authentication.

8. The method according to claim 1, **characterized by** further comprising:
sending a charging message for the terminal to the business support system, so as to make the business support system charge for the terminal.

9. The method according to claim 1, **characterized by** further comprising:
collecting performance data of each media server according to the signaling message exchanged between the terminal and the media server, and reporting the performance data to a network management system.

10. The method according to claim 1, **characterized by** further comprising:
performing signaling protocols conversion according to the protocol processing performance of the media server or the terminal before forwarding the signaling message or the response message.

11. A signaling forwarding device, **characterized by** comprising:
a receiving unit, adapted to receive a signaling message sent by a terminal;
a policy unit, adapted to provide a policy of selecting a media server for a terminal and selecting a media server for the terminal according to a predetermined policy; and
a forwarding unit, adapted to forward the signaling message to the media server selected by the policy unit for the terminal and forwarding a response message from the media server to the terminal.

12. The signaling forwarding device according to claim 11, **characterized in that** the policy is set according to at least one of the following parameters:
CPU occupation, memory occupation, number of users connected to the media server, bandwidth, running state of application software or distribution state of media content.

13. The signaling forwarding device according to claim 11, **characterized by** further comprising:
a mapping relation unit, adapted to establish a mapping between the terminal and the media server when forwarding the signaling message for the first time, and establishing a mapping between the terminal and a selected media server after re-selecting a media server for the terminal;
wherein the forwarding unit forwards the signaling message exchanged between the terminal and the media server according to the mapping.

14. The signaling forwarding device according to claim 11, **characterized by** further comprising:
an authentication unit, adapted to receive an authentication request from the terminal, report the authentication request to the business support system, receive the result of authentication for the terminal sent by the business support system, and send the result of authentication to the media server.

15. The signaling forwarding device according to claim 11, **characterized by** further comprising:
a charging unit, adapted to send a charging message for the terminal to the business support system, so as to make the business support system charge for the terminal.

16. The signaling forwarding device according to claim 11, **characterized by** further comprising:
a performance data unit, adapted to collect performance data of each media server according to the signaling message exchanged between the terminal and the media server, and reporting the performance data to a network management system.

17. The signaling forwarding device according to claim 11, **characterized by** further comprising:
a signaling protocol converting unit, adapted to perform signaling protocols conversion according to the protocol processing performance of the media server or the terminal before forwarding the signaling message or the response message.

18. A stream media system, **characterized by** comprising a signaling forwarding device and a media server, wherein the signaling forwarding device comprises:
a receiving unit, adapted to receive a signaling message sent by a terminal; and
a forwarding unit, adapted to forward the signaling message to the media server selected for the terminal and forwarding a response message from the media server to the terminal; and
the media server is adapted to send a media stream to the terminal according to the received signaling message that is sent by the signaling forwarding device.

19. The stream media system according to claim 18, **characterized in that** the signaling forwarding device is the signaling forwarding device according to any one of claims 11 to 17.
